# EUROPEAN PATENT SPECIFICATION

(11) **EP 3 099 470 B1**
(45) Date of publication and mention of the grant of the patent: **06.03.2019**
(21) Application number: 15743241.0
(22) Date of filing: 28.01.2015
(51) Int. Cl.: B29C 64/245, B33Y 40/00, B33Y 30/00

(54) **A DEVICE AND METHOD FOR REMOVING 3D PRINT MATERIAL FROM BUILD PLATES OF 3D PRINTERS**
VORRICHTUNG UND VERFAHREN ZUM ENTFERNEN EINES 3D-DRUCKMATERIALS VON BAUPLATTEN VON 3D-DRUCKERN
DISPOSITIF ET PROCÉDÉ POUR ENLEVER DU MATÉRIAU IMPRIMÉ EN 3D DE PLAQUES DE CONSTRUCTION D'IMPRIMANTES 3D

(30) Priority: 29.01.2014 US 201461933117 P
(43) Date of publication of application: 07.12.2016
(73) Proprietor: Stocklyn Venture, LLC, Brooklyn, NY 11217 (US)
(72) Inventor: JONDAL, Viktor, 18533 Täby (SE); RAGONETTI, Peter, Brooklyn, New York 11217 (US)
(74) Representative: Noréns Patentbyrå AB
(86) International application number: PCT/US2015/013219
(87) International publication number: WO 2015/116639

(56) References cited:
- WO-A1-99/37454
- WO-A2-2010/049696
- JP-A- H02 128 829
- KR-A- 20090 094 282
- US-A1- 2008 121 172
- US-A1- 2012 291 701
- US-A1- 2013 136 856
- US-A1- 2013 327 917
- Anonymous: "Lexan: The 3D-printer build platform of the future | AK Eric", , 15 June 2013 (2013-06-15), XP055430194, Retrieved from the Internet: URL:http://www.akeric.com/blog/?p=2158 [retrieved on 2017-11-29]

## Description

### CROSS-REFERENCE TO RELATED APPLICATIONS

This application claims priority pursuant to 35 U.S.C. 119(e) to co-pending U.S. Provisional Patent Application, Serial No. 61/933,117, filed January 29, 2014.

### FIELD OF THE INVENTION

The present invention relates to a method and device for removing print material from build plates for three dimensional ("3D") printing systems and, more particularly, to the use of flexible material to replace build plates for 3D printers.

### BACKGROUND OF THE INVENTION

Typically, 3D printing, also known as additive manufacturing, involves depositing print material into sequential layers onto build plates until the desired 3D print is formed. The print material will typically bond onto the surface of the build plate. Once the printing process is complete, the bond between the print material and the build plate will need to be broken for the printed object to be removed from the build plate.

The bond between the print material and the surface of the build plate can make it difficult to remove the 3D print from the build plate following completion of the print process. To remove print material from the build plate, a user may be required to employ hand tools such as a scraper, or other means, to separate the print material from the build plate, which can lead to damage to the 3D print, the surface of the build plate and/or the user. In addition, because build plates are typically reused, it is desirable to ensure that all print material is removed from a build plate before beginning a new printing process. In some instances, such removal can be tedious and time consuming as well as potentially harmful to the build plate.

Accordingly, there is a need for a method and device that allows for the easy and safe removal of 3D prints from a build plate.

### SUMMARY OF INVENTION

The following summary is provided to facilitate an understanding of some of the innovative features unique to the present invention.

The present invention relates to a method and device for removing print material from build plates for 3D printing systems and, more particularly, to the use of flexible material to replace build plates for 3D printers.

An embodiment useful to understand the present invention includes a flexible sheet sized to fit atop the build plate of a 3D printer and sized to receive a 3D print wherein the flexible sheet is made from a material, such as polycarbonate, that may be repeatedly flexed and straightened without fracturing or losing its flat disposition. In a preferred embodiment, the flexible sheet is removably placed on top of the build plate for a 3D printer in a manner that restricts movement of the flexible sheet to ensure the 3D print is accurately completed. Upon completion of the printing process, the flexible sheet and the 3D print are removed from the build plate of the 3D printer and the sheet is flexed to allow the 3D print to be removed from the sheet. In an embodiment, the top surface of the flexible sheet is textured for temporary bonding of the first layer of a 3D print to the flexible sheet so that the 3D print does not move or curl away from the sheet during the printing process.

The present invention advantageously allows the user of a 3D printer to easily and cleanly remove print material from a build plate by simply flexing the sheet, resulting in less damage to 3D prints and to the existing build plate of a 3D printer. It also allows for a more efficient reuse of the 3D printer.

### DESCRIPTION OF DRAWINGS

The accompanying figures are incorporated herein and form a part of the specification for the present invention and further illustrate the present invention:
FIGs. 1 to 6 show perspective views of an exemplary embodiment useful to understand the present invention, namely a flexible sheet placed on a build plate for a 3D printer.
FIGs. 7 to 11 show perspective views of an exemplary embodiment useful to understand the present invention, namely a flexible sheet with a frame placed on a build plate for a 3D printer.
FIGs. 12 to 16 show perspective views of an exemplary embodiment useful to understand the present invention, namely a flexible sheet with a support corners placed on a build plate for a 3D printer.

### DETAILED DESCRIPTION OF INVENTION

The present invention is best understood by reference to the drawings and description set forth herein. Embodiments of the disclosure are discussed below with reference to the drawings. However, those skilled in the art will readily appreciate that the detailed description given herein with respect to the drawings is for explanatory purposes as the invention is defined by the claims.

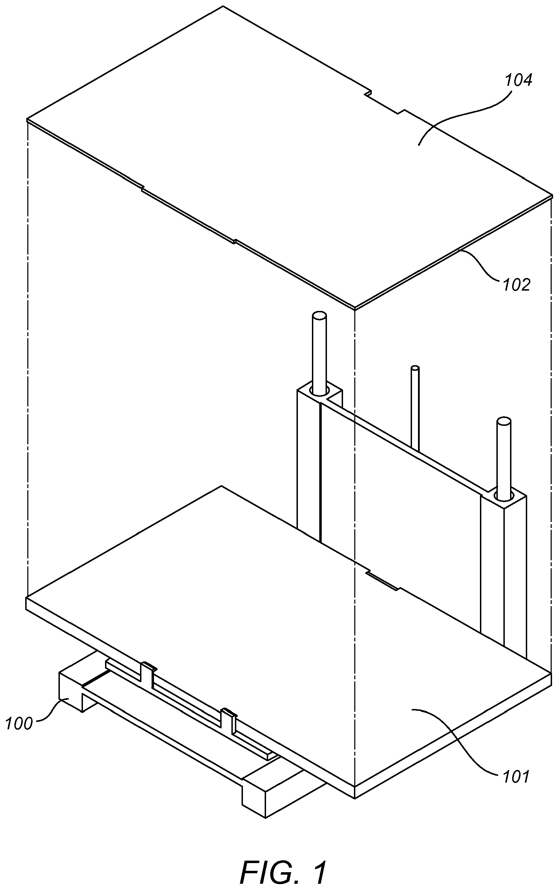

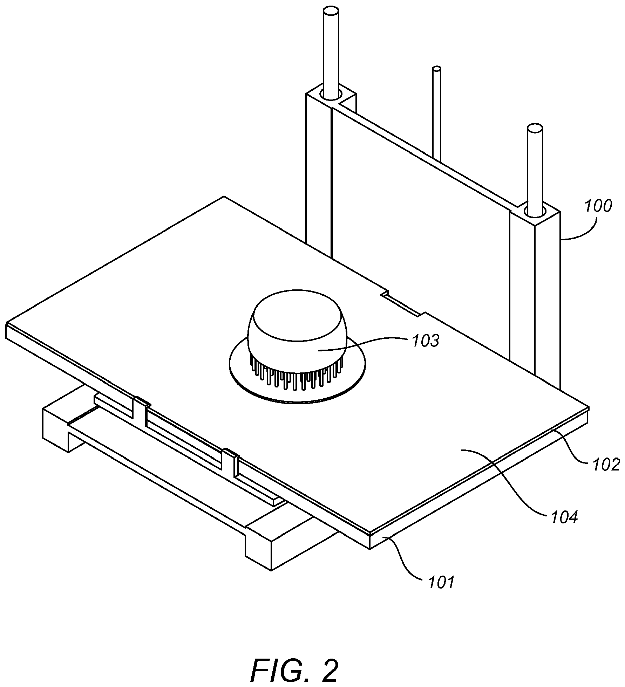

An embodiment useful to understand the invention is provided in FIGs. 1 to 6 and includes a 3D printer **100** with a build plate **101.** A substantially flat sheet **102** of flexible material is sized to place atop the build plate **101** of the 3D printer **100** to receive print material and allow a 3D print **103** to be formed on its top surface **104.** The sheet 102 is sized and shaped to limit movement of the sheet **102** on the build plate **101** during the printing process and to receive and hold deposits of print material from the 3D printer **100.** The sheet **102** is removable from the build plate **101** to allow for the sheet **102** and the 3D print **103** to be lifted from the build plate **101** upon completion of the print.

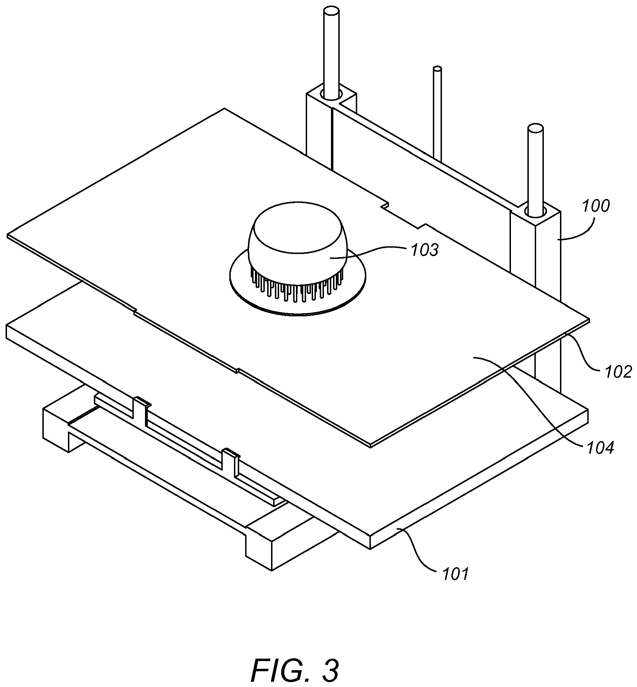

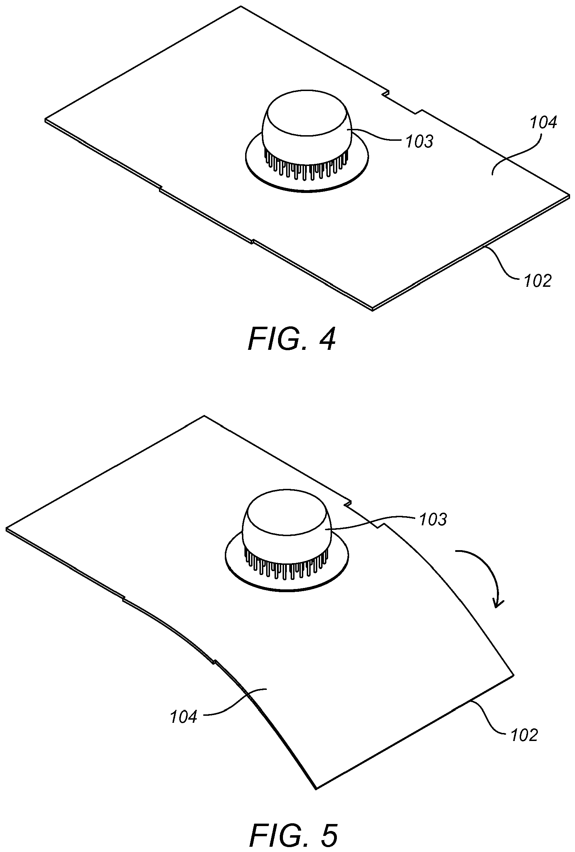

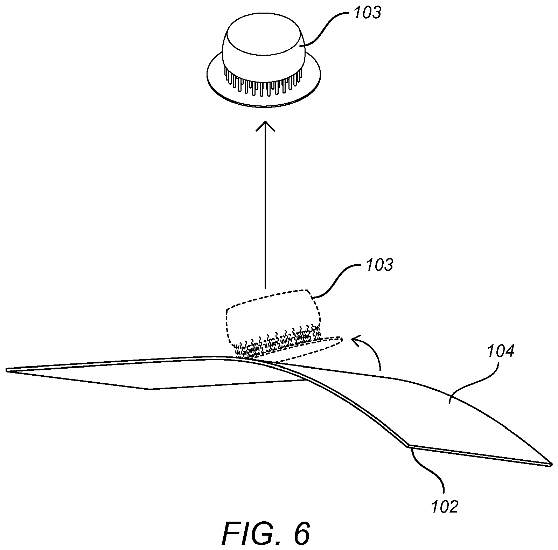

As shown in FIGs. 3 and 4, after formation of a 3D print **103,** a user may lift the sheet **102** and the 3D print **103** from the build plate **101** so that the sheet **102** is generally horizontal and immediately below the 3D print **103**. As illustrated in FIGs. 5 and 6, the sheet **102** may be flexed along its horizontal axis so that at least one edge of the 3D print **103** pulls away from the sheet **102**. Once an edge of the 3D print **103** is exposed, a user may further flex the sheet **102** to remove the 3D print from the flexible sheet **102.**

In an embodiment, the sheet **102** is shaped to the build plate **101** of the particular 3D printer **100.** Such a shape assists in placement of the sheet **102** and limits movement of the sheet **102** during the printing process. However, other sizes and shapes of the sheet **102** may be used, including rectangular, square, circular, and any other shape that may be used with a build plate **101** for a 3D printer **100.** In an embodiment, the sheet **102** is sized to be substantially larger than the desired 3D print **103** to allow the sheet **102** to receive the print **103** and allow the sheet **102** to be flexed sufficiently to remove the 3D print **103** upon completion.

In an embodiment, the sheet **102** is made of a flexible polycarbonate material that may be repeatedly flexed and straightened without fracturing or losing its flat disposition. Other materials with similar qualities may be used, including plasticized materials, metals, graphite, and rubbers.

In an embodiment, the sheet **102** has a thickness of approximately 6.35 mm (1/4 inch) to allow for ease of placing the sheet **102** atop a build plate **101** of a 3D printer **100** and for ease of removing the sheet **102** and the 3D print 103 from the build plate **101** upon completion of the print. Other thicknesses may be used as well, provided the material remains sufficiently flexible to remove the 3D print **103.**

In an embodiment, the top surface **104** of the sheet **102** is textured so that a 3D print **103** does not bond permanently to the surface **104** of the sheet **102** for ease in removing the 3D print **103** from the surface **104** of the sheet **102.** The textured surface **104** of the sheet **102** also allows for sufficient bonding of the first layer of print material to the textured surface **104** of the sheet **102** so that the 3D print **103** remains in the desired location during the printing process and does not separate prematurely or curl from the sheet **102** placed on the build plate **101.**

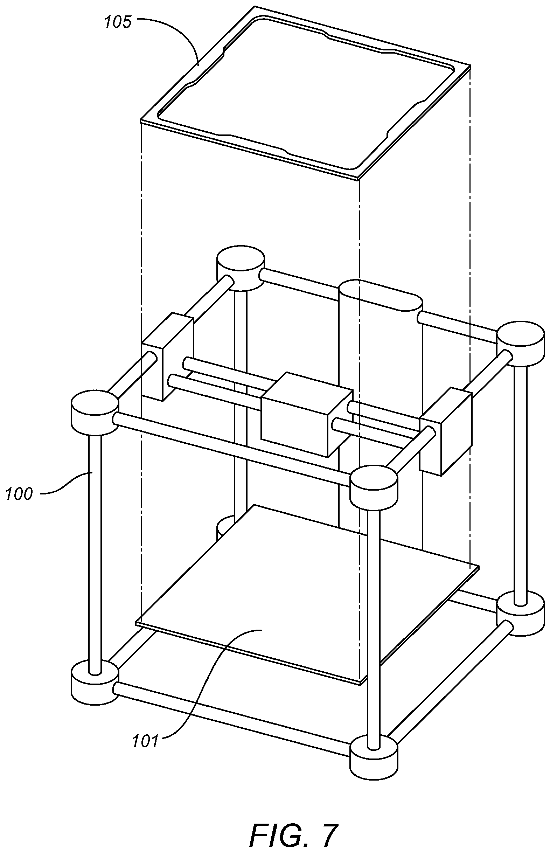

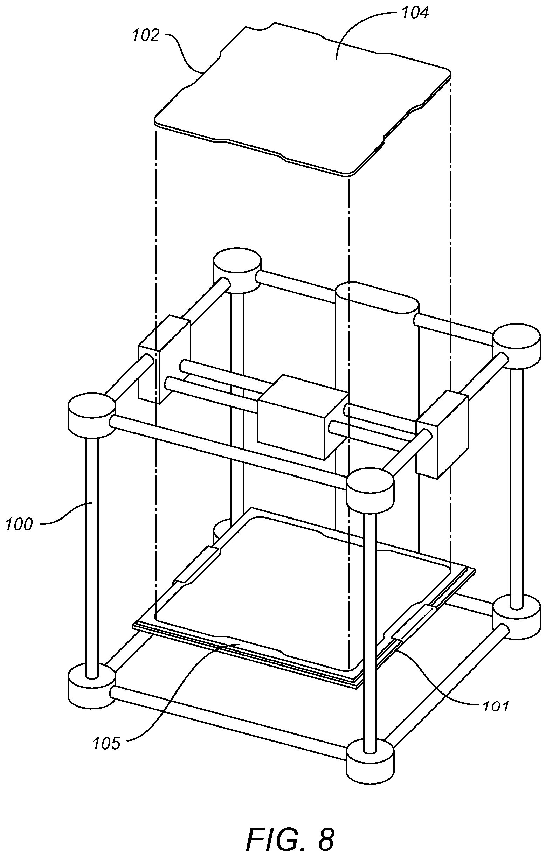

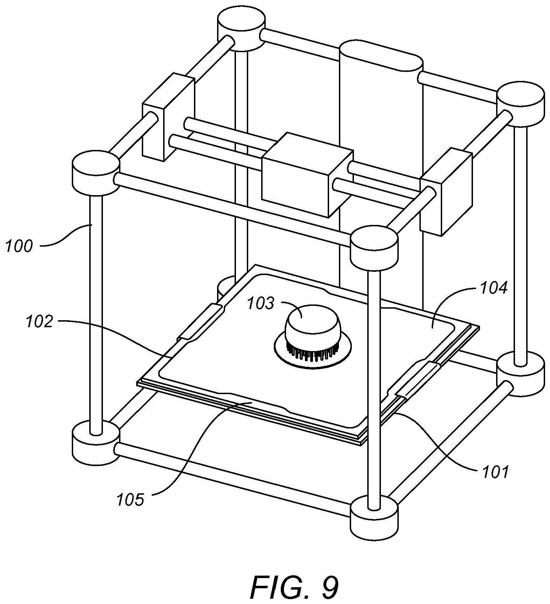

Another embodiment useful to understand the present invention is provided in FIGs. 7 to 11, which show a standard 3D printer **100** with a build plate **101.** A frame **105** is removably attached to the top surface of the build plate **101.** A substantially flat sheet **102** of flexible material is sized to fit within the frame **105** and also placed atop the build plate **101** of the 3D printer **100** to receive print material and allow a 3D print **103** to be formed on its top surface **104.** The frame **105** assists in placing and replacing the sheet **102** in a proper location on the build plate **101** and helps ensure that the sheet **102** remains in the proper location during the printing process. The frame **105** further assists in removing the sheet **102** from the build plate **101** upon completion of the print.

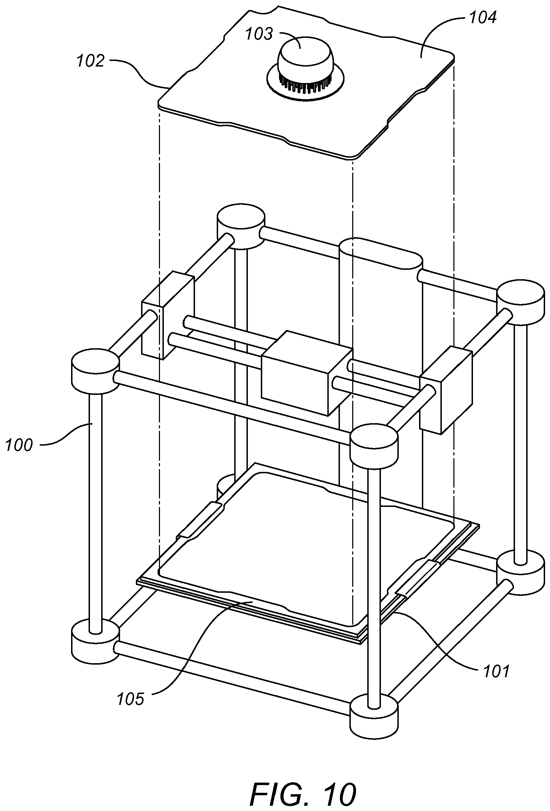

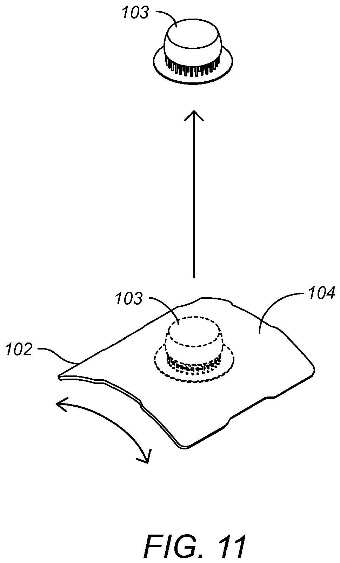

As shown in FIGs. 10 and 11, after formation of a 3D print **103**, a user may lift the flexible sheet **102** and the 3D print **103** from the build plate **101** so that frame **105** remains in place on the build plate **101.** The sheet **102** is held in a generally horizontal position, immediately below the 3D print **103.** As illustrated in FIG. 11, the sheet **102** may be flexed along its horizontal axis so that the 3D print **103** may be removed from the sheet **102.**

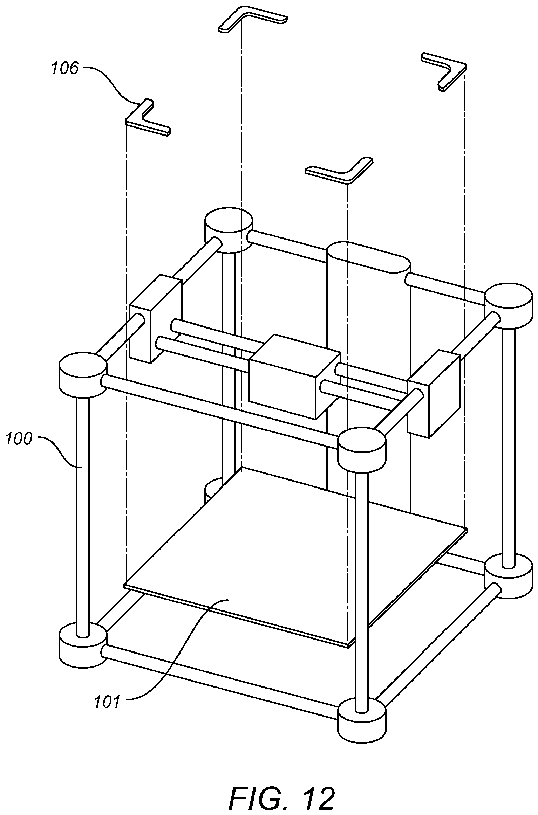

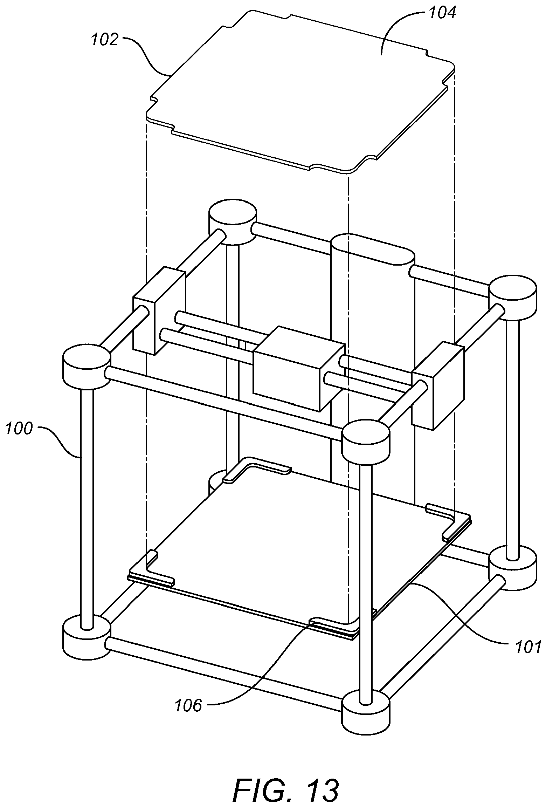

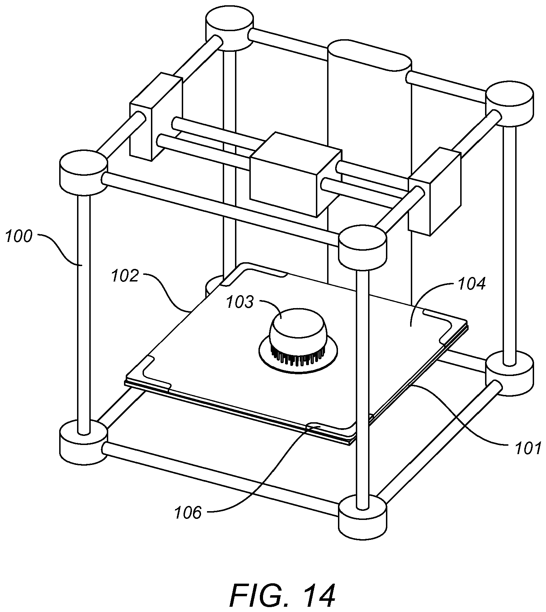

Another embodiment useful to understand the present invention is provided in FIGs. 12 to 16, which show a standard 3D printer **100** with a build plate **101.** Support corners **106** are removably attached to the top surface of the build plate **101.** A substantially flat sheet **102** of flexible material is sized to fit within the support corners **106** and also placed atop the build plate **101** of the 3D printer **100** to receive print material and allow a 3D print **103** to be formed on its top surface **104.** The support corners **106** assist in placing and replacing the sheet **102** in a proper location on the build plate **101** and help ensure that the sheet **102** remains in the proper location during the printing process. The support corners **106** further assist in removing the sheet **102** from the build plate 101 upon completion of the print.

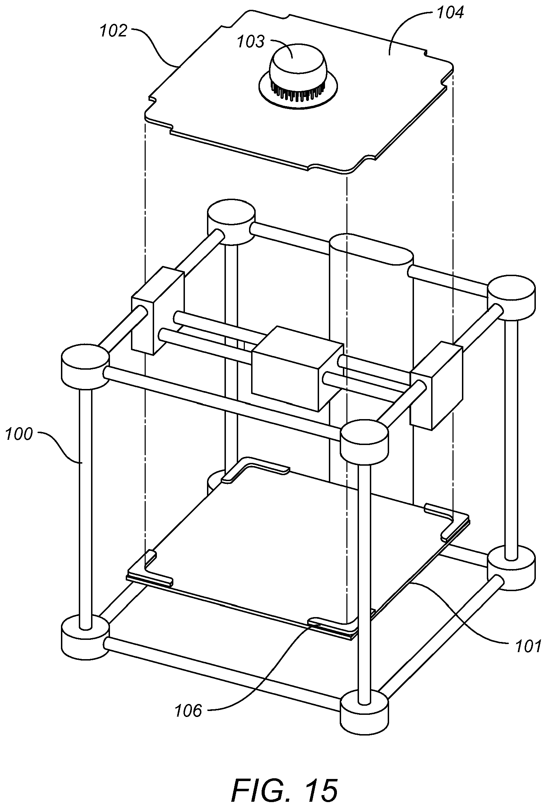

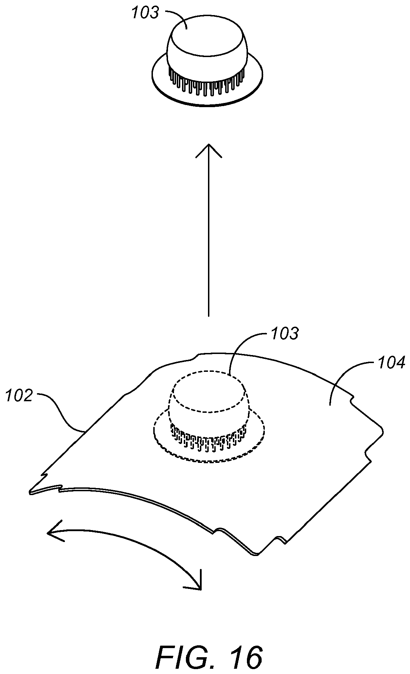

As shown in FIGs. 15 and 16, after formation of a 3D print **103**, a user may lift the flexible sheet **102** and the 3D print **103** from the build plate **101** so that support corners **106** remain in place on the build plate **101.** The sheet **102** is held in a generally horizontal position, immediately below the 3D print **103.** As illustrated in FIG. 16, the sheet **102** may be flexed along its horizontal axis so that the 3D print **103** may be removed from the sheet **102.**

The embodiments described in the drawings involve placing a flexible sheet **102** on top of the build plate **101** for a 3D printer. According to the present invention a removable build plate **101** is made from a flexible material that allows a 3D print **103** to be removed by flexing the build plate 101.

An embodiment of a method of the present disclosure may include the following steps as revealed in FIGs. 1-16:
a 3D printer **100** with a build plate **101**;
sizing a thin sheet **102** of flexible material, such as a polycarbonate sheet, to fit atop the build plate **101** of the 3D printer **100** whereby the flexible sheet **102** is sufficient in size to receive print material from the 3D printer **100** and whereby the sheet **102** has a textured top surface **104** for receiving print material from the 3D printer;
placing the sheet **102** of flexible material on the build plate **101** of the 3D printer **100**;
creating a 3D print **103** on the textured top surface **104** of the flexible sheet **102**;
after the 3D print **103** is completed, removing the flexible sheet **102** from the build plate **101** of the 3D printer **100**;
holding the flexible sheet **102** so that it is generally horizontal and immediately below the 3D print **103**;
removing the 3D print **103** by flexing the sheet **102** along its horizontal axis so that an edge of the 3D print **103** pulls away from the sheet **102**; and
using the exposed edge of the 3D print **103** to remove the 3D print **103** from the sheet **102.**

## Claims

1. A 3D printer comprising a removable build plate (101) consisting of a substantially flat sheet of flexible material of sufficient size to receive and hold deposits of print material from the 3D printer, said sheet being sized to be substantially larger than the desired 3D print to allow the sheet to receive the print and to allow the sheet to be flexed sufficiently to remove the 3D print upon completion wherein the sheet of flexible material can accommodate repeated flexing without fracturing and without loss of the substantially flat disposition, and wherein the sheet of flexible material can be removably placed in the 3D printer prior to the printing process; and a means for preventing movement of the sheet while in the 3D printer and during the printing process, and where the top surface of the flexible sheet is textured for temporary bonding of the first layer of a 3D print to prevent the 3D print from moving on the sheet during the printing process, where the build plate is reusable.

2. The 3D printer of claim 1 where the top surface of the flexible sheet is textured to prevent the 3D print from curling away from the sheet during the printing process.

3. The 3D printer of any one of claims 1 or 2, wherein the flexible material is polycarbonate.

4. The 3D printer of any one of claims 1 to 3 wherein the flexible material is one of plastic, graphite, or metal.

5. A method for removing a 3D print from a build plate (101) of a 3D printer according to claim 1 comprising the steps of:
sizing the sheet to fit in the 3D printer;
removably placing the sheet on in the 3D printer so that the sheet does not move on during the printing process;
creating a 3D print on the top surface of the sheet;
after the 3D print is completed, removing the sheet and the 3D print from the 3D printer;
holding the sheet so that it is generally horizontal and immediately below the 3D print;
removing the 3D print from the sheet by flexing the sheet along its horizontal axis so that an edge of the 3D print pulls away from the sheet; and
using the exposed edge of the 3D print to remove the 3D print from the sheet.

6. The method of claim 5 where the top surface of the flexible sheet is textured so that the 3D print does not move from the sheet during the printing process.

7. The method of claim 5 or 6 where the top surface of the flexible sheet is textured so that the 3D print does not curl away from the sheet during the printing process.

8. Use of a substantially flat sheet of flexible material as a build plate (101) in a 3D printer, the sheet being of sufficient size to receive and hold deposits of print material from the 3D printer, said sheet being sized to be substantially larger than the desired 3D print to allow the sheet to receive the print and to allow the sheet to be flexed sufficiently to remove the 3D print upon completion wherein the sheet of flexible material accommodates repeated flexing without fracturing and without loss of the substantially flat disposition, and wherein the sheet of flexible material is removably placed in the 3D printer prior to the printing process; and a means for preventing movement of the sheet while in the 3D printer and during the printing process, and where the top surface of the flexible sheet is textured for temporary bonding of the first layer of a 3D print to prevent the 3D print from moving on the sheet during the printing process, where the build plate is reusable.

## Patentansprüche

1. Ein 3D-Drucker umfassend eine entfernbare Bauplatte (101) bestehend aus einer im Wesentlichen flachen Platte aus flexiblem Material in ausreichender Größe, um Ablagerung von Druckmaterial des 3D-Druckers aufzunehmen und zu halten,
wobei die besagte Platte dabei im Wesentlichen größer ist als der gewünschte 3D-Ausdruck, um zu ermöglichen, dass die Platte den Ausdruck aufnimmt und um zu erreichen, dass die Platte ausreichend gebeugt werden kann, um den 3D-Ausdruck nach Fertigstellung zu entfernen,
wobei die Platte aus flexiblem Material wiederholtem Beugen standhalten kann, ohne zu brechen und ohne einen wesentlichen Verlust des ebenen Charakters, und wobei die Platte von flexiblem Material vor dem Druckprozess entfernbar in den 3D-Drucker platziert werden kann; und ein Mittel zur Verhinderung der Bewegung der Platte während diese im 3D-Drucker und während des Druckprozesses ist, und
wobei die Oberseite der flexiblen Platte texturiert für ein temporäres Binden der ersten Schicht des 3D-Ausdrucks ist und um ein Bewegen des 3D-Drucks während des Druckprozesses zu verhindern, wobei die Bauplatte wiederverwendbar ist.

2. 3D-Drucker gemäß Anspruch 1,
wobei die Oberseite der flexiblen Platte texturiert ist, um während des Druckprozesses ein sich von der Platte Wegkräuseln des 3D-Ausdrucks zu verhindern.

3. 3D-Drucker gemäß einem der Ansprüche 1 oder 2,
wobei das flexible Material Polycarbonat ist.

4. 3D-Drucker gemäß einem der Ansprüche 1 bis 3,
wobei das flexible Material entweder Plastik, Graphit oder Metall ist.

5. Verfahren zum Entfernen von 3D-Ausdrucken von einer Bauplatte (101) eines 3D-Druckers gemäß Anspruch 1, umfassend die Schritte:
Bemessen der Platte, so dass diese in den 3D-Drucker passt;
entfernbares Platzieren der Platte auf dem 3D-Drucker, so dass die Platte sich während des Druckprozesses nicht weiter bewegt;
Erstellen eines 3D-Ausdrucks auf der Oberfläche der Platte;
nach dem Vollenden des 3D-Ausdrucks Entfernen der Platte und des 3D-Ausdrucks von dem 3D-Drucker;
Halten der Platte, so dass diese im Wesentlichen horizontal und direkt unter dem 3D-Ausdruck ist;
Entfernen des 3D-Ausdrucks von der Platte durch Beugen der Platte entlang ihrer horizontalen Achse, so dass eine Kante des 3D-Ausdrucks von der Platte wegzieht; und
Verwenden der exponierten Kante des 3D-Ausdrucks zum Entfernen des 3D-Ausdrucks von der Platte.

6. Verfahren gemäß Anspruch 5,
wobei die Oberfläche der flexiblen Platte derart texturiert ist, so dass der 3D-Ausdruck nicht während des Druckprozesses von der Platte bewegt wird.

7. Verfahren gemäß Anspruch 5 oder 6,
wobei die Oberfläche der flexiblen Platte derart texturiert ist, so dass der 3D-Ausdruck während des Druckprozesses nicht von der Platte wegkräuselt.

8. Verwendung einer im Wesentlichen ebenen Platte von flexiblem Material als eine Bauplatte (101) in einem 3D-Drucker,
die Platte ausreichend dimensioniert ist, um Ablagerung von Druckmaterial des 3D-Materials aufzunehmen und zu halten,
wobei die besagte Platte dabei im Wesentlichen größer ist als der gewünschte 3D-Ausdruck, um zu ermöglichen, dass die Platte den Ausdruck aufnimmt und um zu erreichen, dass die Platte ausreichend gebeugt werden kann, um den 3D-Ausdruck nach Fertigstellung zu entfernen,
wobei die Platte aus flexiblem Material wiederholtem Beugen standhalten kann, ohne zu brechen und ohne einen wesentlichen Verlust des ebenen Charakters, und wobei die Platte von flexiblem Material vor dem Druckprozess entfernbar in den 3D-Drucker platziert werden kann; und ein Mittel zur Verhinderung der Bewegung der Platte während diese im 3D-Drucker und während des Druckprozesses ist, und
wobei die Oberseite der flexiblen Platte texturiert für ein temporäres Binden der ersten Schicht des 3D-Ausdrucks ist und um ein Bewegen des 3D-Drucks während des Druckprozesses zu verhindern, wobei die Bauplatte wiederverwendbar ist.

## Revendications

1. Imprimante 3D comprenant une plaque de construction amovible (101) constituée d'une feuille sensiblement plane de matériau flexible de taille suffisante pour recevoir et retenir des dépôts de matériau d'impression provenant de l'imprimante 3D, ladite feuille étant dimensionnée pour être sensiblement plus grande que l'impression en 3D souhaitée, afin de permettre à la feuille de recevoir l'impression et de permettre à la feuille de fléchir suffisamment pour retirer l'impression en 3D lors de l'achèvement, dans laquelle la feuille de matériau flexible peut subir des flexions répétées sans se fracturer et sans perte de la disposition sensiblement plane, et dans laquelle la feuille de matériau flexible peut être placée de manière amovible dans l'imprimante 3D, avant le processus d'impression ; et un moyen destiné à empêcher le mouvement de la feuille tandis qu'elle se trouve dans l'imprimante 3D et au cours du processus d'impression, et dans laquelle la surface supérieure de la feuille flexible est texturée aux fins de la liaison temporaire de la première couche d'une impression en 3D, afin d'empêcher l'impression en 3D de se déplacer sur la feuille au cours du processus d'impression, la plaque de construction étant réutilisable.

2. Imprimante 3D selon la revendication 1, dans laquelle la surface supérieure de la feuille flexible est texturée pour empêcher l'impression en 3D de quitter la feuille en s'enroulant, au cours du processus d'impression.

3. Imprimante 3D selon l'une quelconque des revendications 1 et 2, dans laquelle le matériau flexible est du polycarbonate.

4. Imprimante 3D selon l'une quelconque des revendications 1 à 3, dans laquelle le matériau flexible est une matière plastique ou du graphite ou encore un métal.

5. Procédé permettant de retirer une impression en 3D d'une plaque de construction (101) d'imprimante 3D selon la revendication 1, comprenant les étapes suivantes :
dimensionner la feuille pour qu'elle tienne dans l'imprimante 3D ;
placer la feuille de façon amovible dans l'imprimante 3D, de manière que la feuille ne se déplace pas au cours du processus d'impression ;
créer une impression en 3D sur la surface supérieure de la feuille ;
après que l'impression en 3D s'est achevée, retirer la feuille et l'impression en 3D de l'imprimante 3D ;
tenir la feuille de manière qu'elle soit généralement horizontale et immédiatement au-dessous de l'impression en 3D ;
retirer l'impression en 3D de la feuille, en faisant fléchir la feuille le long de son axe horizontal, de manière qu'un bord de l'impression en 3D s'écarte de la feuille ; et
se servir du bord apparent de l'impression en 3D pour retirer l'impression en 3D de la feuille.

6. Procédé selon la revendication 5, dans lequel la surface supérieure de la feuille flexible est texturée de manière que l'impression en 3D ne se déplace pas par rapport à la feuille, au cours du processus d'impression.

7. Procédé selon la revendication 5 ou 6, dans lequel la surface supérieure de la feuille flexible est texturée de manière que l'impression en 3D ne se sépare pas de la feuille en s'enroulant, au cours du processus d'impression.

8. Utilisation d'une feuille sensiblement plane de matériau flexible, en tant que plaque de construction (101) dans une imprimante 3D, la feuille étant de taille suffisante pour recevoir et retenir des dépôts de matériau d'impression provenant de l'imprimante 3D, ladite feuille étant dimensionnée pour être sensiblement plus grande que l'impression en 3D souhaitée, afin de permettre à la feuille de recevoir l'impression et de permettre à la feuille de fléchir suffisamment pour retirer l'impression en 3D lors de l'achèvement, dans laquelle la feuille de matériau flexible subit des flexions répétées sans se fracturer et sans perte de la disposition sensiblement plane, et dans laquelle la feuille de matériau flexible est placée de manière amovible dans l'imprimante 3D avant le processus d'impression ; et d'un moyen destiné à empêcher le mouvement de la feuille tandis qu'elle se trouve dans l'imprimante 3D et au cours du processus d'impression, et dans laquelle la surface supérieure de la feuille flexible est texturée aux fins de la liaison temporaire de la première couche d'une impression en 3D, afin d'empêcher l'impression en 3D de se déplacer sur la feuille au cours du processus d'impression, dans laquelle la plaque de construction est réutilisable.
